# EUROPEAN PATENT APPLICATION

(11) **EP 4 847 464 A1**
(43) Date of publication of application: **02.12.2026**
(21) Application number: 25766871.5
(22) Date of filing: 18.07.2025
(51) Int. Cl.: C03C 10/12, C03C 3/097, C03B 32/02, A47J 36/04, C03C 10/00

(54) **ACID- AND ALKALI-RESISTANT GLASS CERAMIC AND PREPARATION METHOD THEREFOR, AND KITCHEN COOKING UTENSIL OR KITCHEN APPLIANCE**

(30) Priority: 20.03.2025 CN 202510334119
(71) Applicant: Wenzhou Kanger Crystallite Materials Co., Ltd., Longgang City, Wenzhou City, Zhejiang Province (CN)
(72) Inventor: HUANG, Haixiao, Wenzhou, Zhejiang 325802 (CN); CHEN, Dexing, Wenzhou, Zhejiang 325802 (CN); CHEN, Deguo, Wenzhou, Zhejiang 325802 (CN); CHEN, Dechuang, Longgang City, Wenzhou City Zhejiang Province (CN); FU, Kezao, Wenzhou, Zhejiang 325802 (CN); CHEN, Mingken, Longgang City, Wenzhou City Zhejiang Province (CN); GUO, Qinzuan, Wenzhou, Zhejiang 325802 (CN); CHEN, Mingxing, Wenzhou, Zhejiang 325802 (CN)
(74) Representative: Nordic Patent Service A/S
(86) International application number: PCT/CN2025/109336
(87) International publication number: WO 2026/194128

(57) **Abstract**

The present invention belongs to the field of glass-ceramic, and in particular relates to acid and alkali resistant glass-ceramic, a preparation method thereof, and a kitchen stove or kitchen appliance. A chemical composition of the glass-ceramic, on a mole percentage basis, includes: SiO₂: 69.5 mol%-71.5 mol%, Al₂O₃: 13 mol%-14.2 mol%, Li₂O: 7.4 mol%-8.8 mol%, P₂O₅: 0.37 mol%-0.55 mol%, SnO₂: 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2. Based on a total mass of crystals contained in the glass-ceramic, a ratio of a mass content of a β-spodumene solid solution to a mass content of a high-quartz solid solution is 1.2%-9.3%. High-temperature melting and processing performance and acid and alkali corrosion resistance can be improved; thermal expansion can be reduced; and ability to resist sudden thermal changes can be improved.

## Description

### CROSS-REFERENCE TO RELATED APPLICATION

The present invention claims priority to Chinese Patent Application No. 2025103341190, filed with the China National Intellectual Property Administration on March 20, 2025, and entitled "ACID AND ALKALI RESISTANT GLASS-CERAMIC AND PREPARATION METHOD THEREOF, AND KITCHEN STOVE OR KITCHEN APPLIANCE", the contents of which are incorporated herein by reference in entirety.

### TECHNICAL FIELD

The present invention belongs to the technical field of glass-ceramic, and in particular, relates to an acid and alkali resistant glass-ceramic, a preparation method thereof, and a kitchen stove or kitchen appliance.

### BACKGROUND ART

Glass-ceramic is a special glass material containing a large number of micro-nano crystals and residual glass phases. LAS system glass-ceramic, as an important branch of glass-ceramic, has Li₂O-Al₂O₃-SiO₂ as a main composition of a crystalline phase thereof. It exhibits unique characteristics such as low expansion, high strength, and high-temperature resistance, and can withstand sudden temperature changes from 800 °C to room temperature, and even temperature changes from 850 °C to room temperature. It possesses excellent impact resistance, with an impact strength of 0.5 J evaluated by a spring hammer, and a bending strength exceeding 100 MPa, significantly outperforming ordinary glass. Therefore, LAS glass-ceramic is an ideal material for applications in scenarios such as kitchen stove surfaces and home appliance panels.

However, the kitchen environment is highly complex. In addition to basic requirements such as resistance to thermal shock and mechanical impact, glass covers used for stove surfaces and kitchen appliances must also exhibit excellent resistance to acid and alkali corrosion. First, acidic substances are common substances encountered on stove surfaces or home appliances. Ingredients and condiments used in cooking, such as vinegar, tomato sauce, and other condiments, often contain various acidic substances. During a cooking process, some acidic liquids or residues can easily splash onto a glass-ceramic panel, and prolonged contact can damage a surface of the glass-ceramic panel, resulting in formation of various types of spots. Second, alkaline substances deserve more attention, especially during a cleaning phase after cooking. In common scenarios, for example, cleaning of residual substances such as oil stains and grease residues, hot alkaline cleaning agents are highly effective. Particularly when burnt substances adhere to the panel surface due to long-term heating, strongly alkaline cleaning agents are the preferred choice. Moreover, the higher the temperature of the cleaning agents, the better the cleaning effect.

It is well-known in the art that glass-based materials, compared with metallic materials, exhibit superior resistance to acids but inferior resistance to alkalis. Within the field of glass materials, although LAS glass-ceramic demonstrates better acid and alkali resistance than ordinary glass, it remains inadequate in acid and alkali resistance under heating conditions, particularly against hot strongly alkaline solutions, which is highly likely to cause "matting" on a surface of LAS glass-ceramic panels, resulting in loss of gloss due to slight corrosion on the panel surface. Although these defects do not affect safety performance of the glass-ceramic panels, an impaired appearance significantly reduces user experience.

Existing glass-ceramic offers limited acid resistance and alkali resistance, making it difficult to meet usage requirements for kitchen stove surfaces and home appliance panels.

It should be noted that this part of contents of the present invention only provide background related to the present invention, and do not necessarily constitute prior art or known technology.

### SUMMARY

An objective of the present invention is to provide an acid and alkali resistant glass-ceramic and a preparation method thereof, and a kitchen stove or a kitchen appliance, so as to overcome the defects that the existing glass-ceramic has limited acid resistance and alkali resistance, making it difficult to meet the usage requirements for kitchen stove surfaces and home appliance panels. The glass-ceramic exhibits significantly improved acid and alkali resistance, can meet the usage requirements for kitchen stove surfaces and home appliance panels, and protects the appearance of glass-ceramic panels during use.

In order to achieve the above objective, in the first aspect, the present invention provides an acid and alkali resistant glass-ceramic, where a chemical composition thereof, on a mole percentage basis, includes: SiO₂: 69.5 mol%-71.5 mol%, Al₂O₃: 13 mol%-14.2 mol%, Li₂O: 7.4 mol%-8.8 mol%, P₂O₅: 0.37 mol%-0.55 mol%, and SnO₂: 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2.

Based on a total mass of crystals contained in the glass-ceramic, a ratio of a mass content of a β-spodumene solid solution to a mass content of a high-quartz solid solution is 1.2%-9.3%.

The glass-ceramic is subjected to an acid corrosion resistance test, showing a corrosion amount of ≤ 15 mg/dm². Detection conditions for the acid corrosion resistance test include: using a 6 mol/L HCl solution as a corrosive solution, and performing the corrosion under a boiling condition for 6 h. The glass-ceramic is subjected to an alkali corrosion resistance test, showing a corrosion amount of ≤ 175 mg/dm². Detection conditions for the alkali corrosion resistance test include: using a solution as a corrosive solution prepared by mixing equal volumes of a 0.5 mol/L Na₂CO₃ solution and a 1 mol/L NaOH solution, and performing the corrosion under a boiling condition for 3 h.

In some optional embodiments, based on the total mass of crystals contained in the glass-ceramic, the ratio of the mass content of the β-spodumene solid solution to the mass content of the high-quartz solid solution is 2.5%-8.2%.

In some optional embodiments, the ratio of the mass content of the β-spodumene solid solution to the mass content of the high-quartz solid solution is 2.8%-7.4%.

In some optional embodiments, 1.75 < (SiO₂ + Al₂O₃) / (100 × P₂O₅) < 2.2.

In some optional embodiments, 1.9 < (SiO₂ + Al₂O₃) / (100 × P₂O₅) < 2.2.

In some optional embodiments, the chemical composition thereof, on the mole percentage basis, further includes: 1.5 < (CaO + 0.4 × MgO + 1.2 × ZnO) / [0.5 × (BaO + SrO) + 1 × Na₂O + 0.2 × K₂O] < 2.4.

In some optional embodiments, 1.6 < (CaO + 0.4 × MgO + 1.2 × ZnO) / [0.5 × (BaO + SrO) + 1 × Na₂O + 0.2 × K₂O] < 2.4.

In some optional embodiments, 2 < CaO + 0.4 × MgO + 1.2 × ZnO) / [0.5 × (BaO + SrO) + 1 × Na₂O + 0.2 × K₂O] < 2.4.

In some optional embodiments, the chemical composition thereof, on the mole percentage basis, further includes: CaO: 0.05 mol%-0.50 mol%, MgO: 0.90 mol%-1.40 mol%, ZnO: 0.95 mol%-1.45 mol%, SrO + BaO: 0.55 mol%-0.80 mol%, and K₂O + Na₂O: 0.6 mol%-1.0 mol%.

In some optional embodiments, the chemical composition thereof, on the mole percentage basis, further includes: 0.71 < (TiO₂ + ZrO₂) / (R₂O + RO) < 0.89, wherein R₂O represents oxides of monovalent alkali metal elements excluding Li₂O, and RO represents oxides of divalent metal elements.

In some optional embodiments, 0.73 < (TiO₂ + ZrO₂) / (R₂O + RO) < 0.87.

In some optional embodiments, 0.75 < (TiO₂ + ZrO₂) / (R₂O + RO) < 0.85.

In some optional embodiments, the chemical composition thereof, on the mole percentage basis, further includes: TiO₂: 2.3 mol%-2.65 mol%, and ZrO₂: 0.65 mol%-0.95 mol%.

In the second aspect, the present invention provides a preparation method of an acid and alkali resistant glass-ceramic, including: batching according to components of the glass-ceramic described in the first aspect, performing mixing and melting, followed by forming, and subsequently conducting crystal growth.

In the third aspect, the present invention provides a kitchen stove or kitchen appliance, including the glass-ceramic described in the first aspect and/or the glass-ceramic prepared by the preparation method described in the second aspect.

The inventors have discovered that, in LAS glass-ceramic, the resistance of the crystalline phase to acid and alkali is superior to that of the residual glass phase. More unexpectedly, a corrosion resistance behavior of β-spodumene solid solution to acid and alkali is quite different from that of high-quartz solid solution. First, the two differ significantly in crystal morphology. A grain size of high-quartz solid solution is relatively small, mostly ranging from 20 nm to 60 nm. During a high-temperature heat treatment, as a holding time extends or a crystallization temperature increases, the high-quartz solid solution gradually transforms into the β-spodumene solid solution. A crystalline phase transformation process is a process of crystal agglomeration and growth. With polymerization of fine grains, a specific surface area of crystals decreases, resulting in a more stable crystal surface. Additionally, during the process of crystalline phase transformation, more silica participates in crystallization. These factors contribute to higher corrosion resistance of the β-spodumene solid solution when at a solid-liquid interface in acidic or alkaline solutions. Therefore, appropriately promoting precipitation of β-spodumene solid solution crystalline phase significantly enhances the acid and alkali resistance of the LAS glass-ceramic.

However, the inventors have also found that an excessively high content of the β-spodumene solid solution crystalline phase, on the contrary, causes great damage to alkali resistance. This is because during the transformation process from high-quartz solid solution to β-spodumene solid solution, with further participation of silica in crystallization, a unit cell structure has undergone substantial changes. The high-quartz solid solution has a hexagonal crystal system (Hexagonal), with unit cell parameters approximately a = b = 5.2 Å, and c = 5.46 Å. The β-spodumene solid solution has an orthorhombic crystal system (Orthorhombic), with unit cell parameters approximately a = 7.53 Å, b = 7.54 Å, and c = 9.16 Å. The unit cell of the β-spodumene solid solution is significantly larger, and a packing factor of the orthorhombic crystal system in the β-spodumene solid solution is lower than that of the hexagonal crystal system in the high-quartz solid solution. Consequently, the β-spodumene solid solution interiorly contains rapid ion migration channels. An ion migration rate of small-radius cations in the β-spodumene solid solution is significantly higher than that in the high-quartz solid solution. Under an action of OH⁻ in alkaline solutions, elements such as Li, Mg, and Zn in the glass-ceramic are more prone to detach from the crystalline phase and form precipitates in an external solution. A concentration difference of ions across the solid-liquid interface drives continuous precipitation of elements from the β-spodumene solid solution into the external solution. This precipitation rate is significantly higher than that in high-quartz solid solution crystals, ultimately leading to a substantial increase in mass loss per unit surface area.

Furthermore, as is well-known to those skilled in the art, a thermal expansion coefficient of the β-spodumene solid solution is far higher than that of the high-quartz solid solution crystalline phase. An excessively high proportion of the β-spodumene solid solution crystalline phase greatly compromises a linear thermal expansion coefficient of the LAS glass-ceramic, which is likely to cause issues such as panel fracture during heating operation status and should be avoided.

Based on the total mass of crystals contained in the glass-ceramic, the ratio of the mass content of the β-spodumene solid solution to the mass content of the high-quartz solid solution is 1.2%-9.3%, which can improve the acid and alkali resistance of the glass-ceramic and keep a relatively low thermal expansion coefficient (CTE40-700 °C < 0.5 ppm/°C).

In the LAS glass-ceramic, besides the crystalline phase structure and composition that affect the acid and alkali resistance, various oxide components play an important role in the acid and alkali resistance of the glass-ceramic. Their function is reflected in two aspects: first, affecting the acid and alkali resistance of the residual glass phase; and second, affecting the crystallization process. Therefore, the acid and alkali resistance of the LAS glass-ceramic is changed. Moreover, the LAS glass-ceramic in the present invention is prepared through processes such as high-temperature melting and calendering, where these processes limit a selection range of oxides. In terms of final applications, rigid constraints of general requirements such as low expansion and high strength further impose necessary restrictions on the selection range of oxides.

SiO₂ can play a role in enhancing the acid and alkali resistance of the glass-ceramic, but its high melting point makes it difficult to melt. Al₂O₃ also can play a role in improving the acid and alkali resistance, yet it increases viscosity of the glass-ceramic, leading to difficulty in high-temperature melting and overly rapid hardening during a calendering process. Addition of SiO₂ and Al₂O₃ increases the difficulty of melting and forming processes while improving the acid and alkali resistance. Addition of P₂O₅ can reduce high-temperature viscosity and enhance solubility of high-melting-point materials such as alumina and zirconia in the glass, thus avoiding defects like unmelted materials and impurity spots in the high-temperature melting process, but it tends to reduce the acid and alkali resistance of the glass-ceramic. On the basis that a content of SiO₂ is 69.5 mol%-71.5 mol%, a content of Al₂O₃ is 13 mol%-14.2 mol%, and a content of P₂O₅ is 0.37 mol%-0.55 mol%, maintaining 1.65 < (SiO₂ + Al₂O₃) / (100 × P₂O₅) < 2.2 can improve the acid and alkali corrosion resistance of the glass-ceramic while keeping the viscosity of the glass-ceramic within a range suitable for high-temperature melting and forming processes.

In the glass-ceramic of the present invention, the content of SiO₂ is 69.5 mol%-71.5 mol%, the content of Al₂O₃ is 13 mol%-14.2 mol%, the content of Li₂O is 7.4 mol%-8.8 mol%, the content of P₂O₅ is 0.37 mol%-0.55 mol%, the content of SnO₂ is 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2, and based on the total mass of crystals contained in the glass-ceramic, the ratio of the mass content of the β-spodumene solid solution to the mass content of the high-quartz solid solution is 1.2%-9.3%. Through synergistic effects of multiple aspects mentioned above, the acid and alkali corrosion resistance of the glass-ceramic can be improved while maintaining high-temperature melting and processing performance of the glass-ceramic. The glass-ceramic exhibits the corrosion amount of ≤ 15 mg/dm² when subjected to the acid corrosion resistance test, and exhibits the corrosion amount of ≤ 175 mg/dm² when subjected to the alkali corrosion resistance test.

### BRIEF DESCRIPTION OF THE DRAWINGS

In order to more clearly illustrate technical solutions of examples in the present invention, drawings to be used in examples will be briefly introduced below. It should be understood that the following drawings only show some examples of the present invention, and thus they should not be regarded as limiting the scope. For those of ordinary skill in the art, other drawings could also be obtained according to the drawings without inventive efforts.
FIG. 1 shows a crystalline phase test pattern of glass-ceramic of Example 1.
FIG. 2 shows test curves of linear thermal expansion coefficient of glass-ceramic of examples and comparative examples at 40 °C-700 °C.

### DETAILED DESCRIPTION OF EMBODIMENTS

An objective of the present invention is to provide an acid and alkali resistant glass-ceramic and a preparation method thereof, and a kitchen stove or a kitchen appliance, so as to overcome the defects that the existing glass-ceramic has limited acid resistance and alkali resistance, making it difficult to meet the usage requirements for kitchen stove surfaces and home appliance panels. The glass-ceramic exhibits significantly improved acid and alkali resistance, can meet the usage requirements for kitchen stove surfaces and home appliance panels, and protects the appearance of glass-ceramic panels during use.

In order to achieve the above objective, in the first aspect, the present invention provides an acid and alkali resistant glass-ceramic, where a chemical composition thereof, on a mole percentage basis, includes: SiO₂: 69.5 mol%-71.5 mol%, Al₂O₃: 13 mol%-14.2 mol%, Li₂O: 7.4 mol%-8.8 mol%, P₂O₅: 0.37 mol%-0.55 mol%, and SnO₂: 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2.

Based on a total mass of crystals contained in the glass-ceramic, a ratio of a mass content of a β-spodumene solid solution to a mass content of a high-quartz solid solution is 1.2%-9.3%.

The glass-ceramic is subjected to an acid corrosion resistance test, showing a corrosion amount of ≤ 15 mg/dm². Detection conditions for the acid corrosion resistance test include: using a 6 mol/L HCl solution as a corrosive solution, and performing the corrosion under a boiling condition for 6 h. The glass-ceramic is subjected to an alkali corrosion resistance test, showing a corrosion amount of ≤ 175 mg/dm². Detection conditions for the alkali corrosion resistance test include: using a solution as a corrosive solution prepared by mixing equal volumes of a 0.5 mol/L Na₂CO₃ solution and a 1 mol/L NaOH solution, and performing the corrosion under a boiling condition for 3 h.

In some optional embodiments, based on the total mass of crystals contained in the glass-ceramic, the ratio of the mass content of the β-spodumene solid solution to the mass content of the high-quartz solid solution is 2.5%-8.2%.

In some optional embodiments, the ratio of the mass content of the β-spodumene solid solution to the mass content of the high-quartz solid solution is 2.8%-7.4%.

In some optional embodiments, 1.75 < (SiO₂ + Al₂O₃) / (100 × P₂O₅) < 2.2.

In some optional embodiments, 1.9 < (SiO₂ + Al₂O₃) / (100 × P₂O₅) < 2.2.

In some optional embodiments, the chemical composition thereof, on the mole percentage basis, further includes: 1.5 < (CaO + 0.4 × MgO + 1.2 × ZnO) / [0.5 × (BaO + SrO) + 1 × Na₂O + 0.2 × K₂O] < 2.4.

In some optional embodiments, 1.6 < (CaO + 0.4 × MgO + 1.2 × ZnO) / [0.5 × (BaO + SrO) + 1 × Na₂O + 0.2 × K₂O] < 2.4.

In some optional embodiments, 2 < CaO + 0.4 × MgO + 1.2 × ZnO) / [0.5 × (BaO + SrO) + 1 × Na₂O + 0.2 × K₂O] < 2.4.

In some optional embodiments, the chemical composition thereof, on the mole percentage basis, further includes: CaO: 0.05 mol%-0.50 mol%, MgO: 0.90 mol%-1.40 mol%, ZnO: 0.95 mol%-1.45 mol%, SrO + BaO: 0.55 mol%-0.80 mol%, and K₂O + Na₂O: 0.6 mol%-1.0 mol%.

In some optional embodiments, the chemical composition thereof, on the mole percentage basis, further includes: 0.71 < (TiO₂ + ZrO₂) / (R₂O + RO) < 0.89, wherein R₂O represents oxides of monovalent alkali metal elements excluding Li₂O, and RO represents oxides of divalent metal elements.

In some optional embodiments, 0.73 < (TiO₂ + ZrO₂) / (R₂O + RO) < 0.87.

In some optional embodiments, 0.75 < (TiO₂ + ZrO₂) / (R₂O + RO) < 0.85.

In some optional embodiments, the chemical composition thereof, on the mole percentage basis, further includes: TiO₂: 2.3 mol%-2.65 mol%, and ZrO₂: 0.65 mol%-0.95 mol%.

In the second aspect, the present invention provides a preparation method of an acid and alkali resistant glass-ceramic, including: batching according to components of the glass-ceramic described in the first aspect, performing mixing and melting, followed by forming, and subsequently conducting crystal growth.

In the third aspect, the present invention provides a kitchen stove or kitchen appliance, including the glass-ceramic described in the first aspect and/or the glass-ceramic prepared by the preparation method described in the second aspect.

The inventors have discovered that, in LAS glass-ceramic, the resistance of the crystalline phase to acid and alkali is superior to that of the residual glass phase. More unexpectedly, a corrosion resistance behavior of β-spodumene solid solution to acid and alkali is quite different from that of high-quartz solid solution. First, the two differ significantly in crystal morphology. A grain size of high-quartz solid solution is relatively small, mostly ranging from 20 nm to 60 nm. During a high-temperature heat treatment, as a holding time extends or a crystallization temperature increases, the high-quartz solid solution gradually transforms into the β-spodumene solid solution. A crystalline phase transformation process is a process of crystal agglomeration and growth. With polymerization of fine grains, a specific surface area of crystals decreases, resulting in a more stable crystal surface. Additionally, during the process of crystalline phase transformation, more silica participates in crystallization. These factors contribute to higher corrosion resistance of the β-spodumene solid solution when at a solid-liquid interface in acidic or alkaline solutions. Therefore, appropriately promoting precipitation of β-spodumene solid solution crystalline phase significantly enhances the acid and alkali resistance of the LAS glass-ceramic.

However, the inventors have also found that an excessively high content of the β-spodumene solid solution crystalline phase, on the contrary, causes great damage to alkali resistance. This is because during the transformation process from high-quartz solid solution to β-spodumene solid solution, with further participation of silica in crystallization, a unit cell structure has undergone substantial changes. The high-quartz solid solution has a hexagonal crystal system (Hexagonal), with unit cell parameters approximately a = b = 5.2 Å, and c = 5.46 Å. The β-spodumene solid solution has an orthorhombic crystal system (Orthorhombic), with unit cell parameters approximately a = 7.53 Å, b = 7.54 Å, and c = 9.16 Å. The unit cell of the β-spodumene solid solution is significantly larger, and a packing factor of the orthorhombic crystal system in the β-spodumene solid solution is lower than that of the hexagonal crystal system in the high-quartz solid solution. Consequently, the β-spodumene solid solution interiorly contains rapid ion migration channels. An ion migration rate of small-radius cations in the β-spodumene solid solution is significantly higher than that in the high-quartz solid solution. Under an action of OH⁻ in alkaline solutions, elements such as Li, Mg, and Zn in the glass-ceramic are more prone to detach from the crystalline phase and form precipitates in an external solution. A concentration difference of ions across the solid-liquid interface drives continuous precipitation of elements from the β-spodumene solid solution into the external solution. This precipitation rate is significantly higher than that in high-quartz solid solution crystals, ultimately leading to a substantial increase in mass loss per unit surface area.

Furthermore, as is well-known to those skilled in the art, a thermal expansion coefficient of the β-spodumene solid solution is far higher than that of the high-quartz solid solution crystalline phase. An excessively high proportion of the β-spodumene solid solution crystalline phase greatly compromises a linear thermal expansion coefficient of the LAS glass-ceramic, which is likely to cause issues such as panel fracture during heating operation status and should be avoided.

Based on the total mass of crystals contained in the glass-ceramic, the ratio of the mass content of the β-spodumene solid solution to the mass content of the high-quartz solid solution is 1.2%-9.3%, which can improve the acid and alkali resistance of the glass-ceramic and keep a relatively low thermal expansion coefficient (CTE40-700 °C < 0.5 ppm/°C).

In the LAS glass-ceramic, besides the crystalline phase structure and composition that affect the acid and alkali resistance, various oxide components play an important role in the acid and alkali resistance of the glass-ceramic. Their function is reflected in two aspects: first, affecting the acid and alkali resistance of the residual glass phase; and second, affecting the crystallization process. Therefore, the acid and alkali resistance of the LAS glass-ceramic is changed. Moreover, the LAS glass-ceramic in the present invention is prepared through processes such as high-temperature melting and calendering, where these processes limit a selection range of oxides. In terms of final applications, rigid constraints of general requirements such as low expansion and high strength further impose necessary restrictions on the selection range of oxides.

SiO₂ can play a role in enhancing the acid and alkali resistance of the glass-ceramic, but its high melting point makes it difficult to melt. Al₂O₃ also can play a role in improving the acid and alkali resistance, yet it increases viscosity of the glass-ceramic, leading to difficulty in high-temperature melting and overly rapid hardening during a calendering process. Addition of SiO₂ and Al₂O₃ increases the difficulty of melting and forming processes while improving the acid and alkali resistance. Addition of P₂O₅ can reduce high-temperature viscosity and enhance solubility of high-melting-point materials such as alumina and zirconia in the glass, thus avoiding defects like unmelted materials and impurity spots in the high-temperature melting process, but it tends to reduce the acid and alkali resistance of the glass-ceramic. On the basis that a content of SiO₂ is 69.5 mol%-71.5 mol%, a content of Al₂O₃ is 13 mol%-14.2 mol%, and a content of P₂O₅ is 0.37 mol%-0.55 mol%, maintaining 1.65 < (SiO₂ + Al₂O₃) / (100 × P₂O₅) < 2.2 can improve the acid and alkali corrosion resistance of the glass-ceramic while keeping the viscosity of the glass-ceramic within a range suitable for high-temperature melting and forming processes.

In the glass-ceramic of the present invention, the content of SiO₂ is 69.5 mol%-71.5 mol%, the content of Al₂O₃ is 13 mol%-14.2 mol%, the content of Li₂O is 7.4 mol%-8.8 mol%, the content of P₂O₅ is 0.37 mol%-0.55 mol%, the content of SnO₂ is 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2, and based on the total mass of crystals contained in the glass-ceramic, the ratio of the mass content of the β-spodumene solid solution to the mass content of the high-quartz solid solution is 1.2%-9.3%. Through synergistic effects of multiple aspects mentioned above, the acid and alkali corrosion resistance of the glass-ceramic can be improved while maintaining high-temperature melting and processing performance of the glass-ceramic. The glass-ceramic exhibits the corrosion amount of ≤ 15 mg/dm² when subjected to the acid corrosion resistance test, and exhibits the corrosion amount of ≤ 175 mg/dm² when subjected to the alkali corrosion resistance test.

### BRIEF DESCRIPTION OF THE DRAWINGS

In order to more clearly illustrate technical solutions of examples in the present invention, drawings to be used in examples will be briefly introduced below. It should be understood that the following drawings only show some examples of the present invention, and thus they should not be regarded as limiting the scope. For those of ordinary skill in the art, other drawings could also be obtained according to the drawings without inventive efforts.

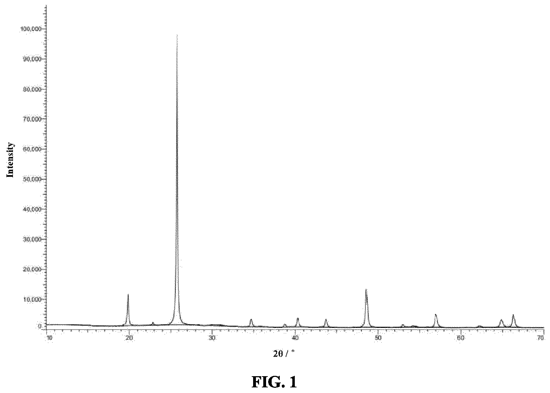

FIG. 1 shows a crystalline phase test pattern of glass-ceramic of Example 1.

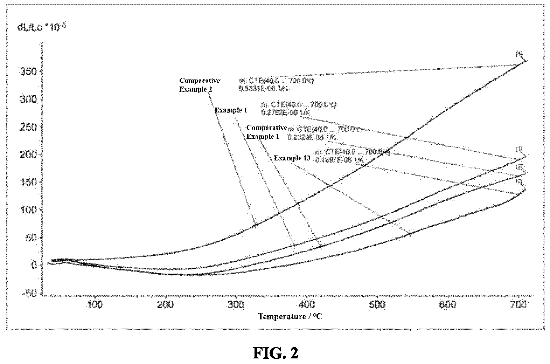

FIG. 2 shows test curves of linear thermal expansion coefficient of glass-ceramic of examples and comparative examples at 40 °C-700 °C.

### DETAILED DESCRIPTION OF EMBODIMENTS

Endpoints and any values of a range disclosed in the present invention are not limited to the precise range or values; these ranges or values should be understood to include values close to these ranges or values. For numerical ranges, endpoints of various ranges, endpoints and individual points of various ranges, and individual points can be combined to form one or more new numerical ranges, where the numerical ranges should be considered as specifically disclosed herein.

The inventors of the present invention have found through research that in the prior art, glass-ceramic exhibits limited acid and alkali resistance. When used in scenarios such as kitchen stove surfaces and home appliance panels, it is prone to contact acidic or alkaline condiments or cleaning agents containing acidic or alkaline substances, thus easily leading to surface damage, impairing user experience, and failing to meet the usage requirements for kitchen stove surfaces and home appliance panels.

In the first aspect, the present invention provides an acid and alkali resistant glass-ceramic, where a chemical composition thereof, on a mole percentage basis, includes: SiO₂: 69.5 mol%-71.5 mol%, Al₂O₃: 13 mol%-14.2 mol%, Li₂O: 7.4 mol%-8.8 mol%, P₂O₅: 0.37 mol%-0.55 mol%, SnO₂: 0.05 mol%-0.15 mol%, As₂O₃ + Sb₂O₃ + B₂O₃ + F < 0.1 mol%, and 1.65 < (SiO₂ + Al₂O₃) / (100 × P₂O₅) < 2.2.

Based on a total mass of crystals contained in the glass-ceramic, a ratio of a mass content of a β-spodumene solid solution to a mass content of a high-quartz solid solution is 1.2%-9.3%.

The glass-ceramic is subjected to an acid corrosion resistance test, showing a corrosion amount of ≤ 15 mg/dm². Detection conditions for the acid corrosion resistance test include: using 6 mol/L HCl solution as a corrosive solution, and performing the corrosion under a boiling condition for 6 h. The glass-ceramic is subjected to an alkali corrosion resistance test, showing a corrosion amount of ≤ 175 mg/dm². Detection conditions for the alkali corrosion resistance test include: using a solution as a corrosive solution prepared by mixing equal volumes of a 0.5 mol/L Na₂CO₃ solution and a 1 mol/L NaOH solution, and performing the corrosion under a boiling condition for 3 h.

The inventors found that the high-quartz solid solution has fine grains, predominantly ranging from 20 nm to 60 nm in size. After the high-quartz solid solution is transformed into the β-spodumene solid solution, the crystals agglomerate and grow, resulting in a reduced specific surface area and a more stable crystal surface. The high-quartz solid solution has a hexagonal crystal system (Hexagonal) with unit cell parameters approximately a = b = 5.2 Å, and c = 5.46 Å. The β-spodumene solid solution has an orthorhombic crystal system (Orthorhombic) with unit cell parameters approximately a = 7.53 Å, b = 7.54 Å, and c = 9.16 Å. The unit cell of β-spodumene solid solution is significantly larger, and a packing factor of the orthorhombic crystal system of the β-spodumene solid solution is lower than that of the hexagonal crystal system of the high-quartz solid solution. The β-spodumene solid solution interiorly contains rapid ion migration channels. The ion migration rate of small-radius cations in the β-spodumene solid solution is significantly higher than that in the high-quartz solid solution. Under an action of OH⁻ in alkaline solutions, elements such as Li, Mg, and Zn in the glass-ceramic are more prone to detach from the crystalline phase and form precipitates in an external solution. A concentration difference of ions across the solid-liquid interface drives continuous precipitation of elements from the β-spodumene solid solution into the external solution. Appropriately increasing a content of the β-spodumene solid solution in the crystals can enhance the acid and alkali resistance of the glass-ceramic. However, when the content of the β-spodumene solid solution becomes excessively high, it conversely reduces the acid and alkali resistance of the glass-ceramic.

Herein, based on the total mass of crystals contained in the glass-ceramic, the ratio of the mass content of the β-spodumene solid solution to the mass content of the high-quartz solid solution is 1.2%-9.3%, which can improve the acid and alkali resistance of glass-ceramic. When the ratio is lower than 1.2%, the acid and alkali resistance of glass-ceramic is affected because the crystal surface is not stable enough. When the ratio is higher than 9.3%, the acid and alkali resistance of the glass-ceramic is affected because the ion migration rate of small-radius cations in the β-spodumene solid solution is significantly higher than that in the high-quartz solid solution.

Herein, Li₂O serves as an effective fluxing agent. During a high-temperature melting process, it reduces high-temperature viscosity, promotes homogenization and refining of molten glass, and at the same time, it facilitates high-temperature calendering and forming. Additionally, in a high-temperature crystallization process, Li₂O can further reduce the crystallization temperature of both the high-quartz solid solution and the β-spodumene solid solution, thus promoting crystallization and thereby reducing the expansion coefficient of the glass-ceramic. By maintaining the content of Li₂O in the glass-ceramic to be 7.4 mol%-8.8 mol%, in the present invention, the cost can be reduced while the high-temperature viscosity can be reduced, the high-temperature melting difficulty can be lowered, the damage of forming and rolling can be suppressed, and the crystallization temperature can be lowered. Furthermore, it prevents the formation of crystalline phases such as lithium disilicate, which would increase the thermal expansion coefficient of the glass-ceramic and cause it to fail to meet requirements for resisting sudden thermal changes. If the content of Li₂O is lower than 7.4 mol%, the viscosity of the glass-ceramic becomes excessively high, leading to issues such as difficulty in melting, rapid damage during rolling, and elevated crystallization temperatures, thereby challenging industrial production. If the content of Li₂O exceeds 8.8 mol%, the production cost becomes uneconomical, and the glass-ceramic tends to fail to meet the requirements for resisting sudden thermal changes.

Herein, SiO₂ has a relatively high melting point. A content of SiO₂ within 69.5 mol%-71.5 mol% can decrease the thermal expansion coefficient and improve an ability of the glass-ceramic to resist thermal shock while reducing the melting difficulty, thus enhancing the acid and alkali resistance. If the content of SiO₂ is lower than 69.5 mol%, the acid and alkali resistance and the resistance to thermal shock of the glass-ceramic are affected. If the content of SiO₂ exceeds 71.5 mol%, because of the high melting point of SiO₂, it is difficult to melt, thereby increasing the difficulty in melting and processing the glass-ceramic.

Herein, the content of Al₂O₃ is 13 mol%-14.2 mol%, which not only can improve the hardness and acid and alkali resistance of the glass-ceramic, but also reduces the viscosity of the molten glass, lowers the difficulty of high-temperature melting, minimizes bubbles in the molten glass, suppresses crystallization before rolling, prevents excessively rapid hardening during calendering, and inhibits the increase of thermal expansion coefficient caused by formation of undesirable crystalline phases such as mullite during a high-temperature crystallization process. If the content of Al₂O₃ is lower than 13 mol%, the acid and alkali resistance of the glass-ceramic is affected. If the content of Al₂O₃ is higher than 14.2 mol%, it can easily cause high viscosity, which makes high-temperature melting difficult and prevents bubble elimination; it can also lead to excessively rapid hardening during the calendering process, which results in failure to achieve a specified thickness, potential crystallization before rolling, and consequent plate warpage, deformation, and accelerated roller wear; and it can cause formation of undesirable crystalline phases such as mullite during high-temperature crystallization, which increases the thermal expansion coefficient.

Herein, the content of P₂O₅ is 0.37 mol%-0.55 mol%, which can reduce the high-temperature viscosity, improve the solubility of high-melting-point materials such as alumina and zirconia in the glass, thus avoiding the defects such as unmelted materials and impurity spots in the high-temperature melting process; and at the same time, it can improve the acid and alkali resistance of glass-ceramic. If the content of P₂O₅ is lower than 0.37 mol%, it results in high viscosity at high temperature, causing defects such as unmelted materials and impurity spots during the high-temperature melting process. If the content of P₂O₅ is higher than 0.55 mol%, it affects the acid and alkali resistance.

Herein, the content of SnO₂ is 0.05 mol%-0.15 mol%, which can avoid premature crystallization in the calendering process while promoting the elimination of bubbles in the glass-ceramic at high temperature. If it is lower than 0.05 mol%, the glass-ceramic is prone to bubbles, and if it is higher than 0.15 mol%, the premature crystallization tends to occur in the calendering process.

Herein, B₂O₃ and F elements increase the thermal expansion coefficient and reduce the acid and alkali resistance of the glass-ceramic. As₂O₃ and Sb₂O₃ possess physiological toxicity. Maintaining As₂O₃ + Sb₂O₃ + B₂O₃ + F < 0.1 mol% can reduce the thermal expansion coefficient of the glass-ceramic, and lower the physiological toxicity while enhancing the acid and alkali resistance.

Herein, SiO₂ can play a role in enhancing the acid and alkali resistance of the glass-ceramic, but its high melting point makes it difficult to melt. Al₂O₃ also plays a role in improving the acid and alkali resistance, yet it increases the viscosity of the glass-ceramic, leading to difficulty in high-temperature melting and overly rapid hardening during the calendering process. The addition of SiO₂ and Al₂O₃ increases the difficulty of the melting and forming processes while improving the acid and alkali resistance. The addition of P₂O₅ can reduce high-temperature viscosity and enhance the solubility of high-melting-point materials such as alumina and zirconia in the glass, avoiding defects like unmelted materials and impurity spots in the high-temperature melting process; however, it tends to reduce the acid and alkali resistance of the glass-ceramic. On the basis that the content of SiO₂ is 69.5 mol%-71.5 mol%, the content of Al₂O₃ is 13 mol%-14.2 mol% and the content of P₂O₅ is 0.37 mol%-0.55 mol%, maintaining 1.65 < (SiO₂ + Al₂O₃) / (100 × P₂O₅) < 2.2 can improve the acid and alkali corrosion resistance of the glass-ceramic while keeping the viscosity of glass-ceramic in the range suitable for high-temperature melting and forming processes. If (SiO₂ + Al₂O₃) / (100 × P₂O₅) in the present invention is greater than 2.2, it is likely to cause the problems of difficulty in high-temperature melting, inability to remove bubbles, excessively rapid hardening during the calendering process, and crystallization before rolling, and if it is less than 1.65, it is prone to cause the problem of decreased acid and alkali resistance.

The chemical composition of the glass-ceramic in the present invention, on a mole percentage basis, includes: SiO₂: 69.5 mol%-71.5 mol%, Al₂O₃: 13 mol%-14.2 mol%, Li₂O: 7.4 mol%-8.8 mol%, P₂O₅: 0.37 mol%-0.55 mol%, SnO₂: 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2. Based on the total mass of crystals contained in the glass-ceramic, the ratio of the mass content of the β-spodumene solid solution to the mass content of the high-quartz solid solution is 1.2%-9.3%. Through interactions among the contents of various oxides, a relationship between the contents of SiO₂ + Al₂O₃ and P₂O₅, and a relationship between the content of the β-spodumene solid solution and the content of the high-quartz solid solution, it is possible to simultaneously improve the high-temperature melting and processing performance of the glass-ceramic, enhance the acid and alkali corrosion resistance of the glass-ceramic, reduce thermal expansion of the glass-ceramic, and elevate ability of the glass-ceramic to resist sudden thermal changes.

It is understandable that, when the glass-ceramic is subjected to the acid corrosion resistance test, the corrosion amount is ≤ 15 mg/dm², and when the glass-ceramic is subjected to the alkali corrosion resistance test, the corrosion amount is ≤ 175 mg/dm², indicating that when used in scenarios such as kitchen stove surfaces and home appliance panels, the glass-ceramic can meet the usage requirements for kitchen stove surfaces and home appliance panels.

In optional embodiments, the content of SiO₂ is, such as, 69.5 mol%, 70 mol%, 70.5 mol%, 71 mol% and 71.5 mol%.

In optional embodiments, the content of Al₂O₃ is, such as, 13 mol%, 13.3 mol%, 13.6 mol%, 13.8 mol% and 14.2 mol%.

In optional embodiments, the content of Li₂O is, such as, 7.4 mol%, 7.7 mol%, 8.1 mol%, 8.4 mol% and 8.8 mol%.

In optional embodiments, the content of P₂O₅ is, such as, 0.37 mol%, 0.39 mol%, 0.43 mol%, 0.48 mol%, 0.51 mol% and 0.55 mol%.

In optional embodiments, the content of SnO₂ is, such as, 0.05 mol%, 0.07 mol%, 0.09 mol%, 0.11 mol%, 0.13 mol% and 0.15 mol%.

In optional embodiments, (SiO₂ + Al₂O₃) / (100 × P₂O₅) is, such as, 1.65, 1.7, 1.8, 1.9, 2, 2.1 and 2.2.

In optional embodiments, the ratio of the mass content of the β-spodumene solid solution to the mass content of the high-quartz solid solution is, such as, 1.2%, 2.5%, 3.5%, 4.5%, 5.5%, 6.5%, 7.5%, 8.5% and 9.3%.

An acid corrosion resistance test method in the present invention follows GB/T 15728-2021 or *DIN 121166-2001*, while an alkali corrosion resistance test method follows GB/T 6580-2021 or *ISO 695-1991*. A formula for acid-resistance corrosion amount is H = (mass difference / surface area) / 2, meaning that for the acid corrosion resistance test, a half value of corrosion amount of 6 h is taken as the corrosion amount. A formula for alkali-resistance corrosion amount is ρ = mass difference / surface area, meaning that for the alkali corrosion resistance test, a value of corrosion amount of 3 h is taken as the corrosion amount.

In some optional embodiments, based on the total mass of crystals contained in the glass-ceramic, the ratio of the mass content of the β-spodumene solid solution to the mass content of the high-quartz solid solution is 2.5%-8.2%. Herein, the ratio of the mass content of the β-spodumene solid solution to the mass content of the high-quartz solid solution can be 2.5%, 3.5%, 4.5%, 5.5%, 6.5%, 7.5%, 8.2%, etc.

Further optionally, the ratio of the mass content of the β-spodumene solid solution to the mass content of the high-quartz solid solution is 2.8%-7.4%. It is understandable that in this solution, it is more beneficial to improve the acid and alkali resistance of the glass-ceramic.

In the present invention, based on the total mass of crystals contained in the glass-ceramic, a sum of the mass content of the β-spodumene solid solution and that of the high-quartz solid solution is preferably greater than 95wt%.

In some optional embodiments, 1.75 < (SiO₂ + Al₂O₃) / (100 × P₂O₅) < 2.2, where (SiO₂ + Al₂O₃) / (100 × P₂O₅) can be 1.75, 1.8, 1.9, 2, 2.1 and 2.2, etc.

Further optionally, 1.9 < (SiO₂ + Al₂O₃) / (100 × P₂O₅) < 2.2. It is understandable that in this solution, it is more beneficial to enhance the acid and alkali corrosion resistance of the glass-ceramic while maintaining the viscosity of the glass-ceramic within a range suitable for high-temperature melting and forming processes.

In some optional embodiments, the chemical composition thereof, on a mole percentage basis, further includes: 1.5 < (CaO + 0.4 × MgO + 1.2 × ZnO) / [0.5 × (BaO + SrO) + 1 × Na₂O + 0.2 × K₂O] < 2.4, where (CaO + 0.4 × MgO + 1.2 × ZnO) / [0.5 × (BaO + SrO) + 1 × Na₂O + 0.2 × K₂O] is, for example, 1.5, 1.6, 1.7, 1.8, 1.9, 2, 2.1, 2.2, 2.3 and 2.4.

It is found in the present invention that the LAS system glass-ceramic can form β-quartz solid solution during a controlled crystallization process, exhibiting unique low expansion characteristics. Alkali and alkaline earth metals act as fluxing agents during a glass melting process, thus reducing the melting difficulty of glass-ceramic and improving quality of a glass melt. However, during the high-temperature crystallization process, effects of these two groups of elements differ. Although lithium oxide is an alkali metal, it is a main component of the crystalline phase in LAS glass-ceramic. All other alkali and alkaline earth metal elements increase the expansion coefficient of the glass-ceramic. Among them, sodium oxide and potassium oxide, acting as network modifiers, can break Si-O bonds and cause cleavage of part of bridging oxygen bonds, thereby weakening the acid and alkali resistance of the glass. Moreover, during the crystallization process, they tend to enrich in residual glass phase; an increase in their content has a significant impact on the increase in the expansion coefficient and the decrease in the acid and alkali resistance of the glass-ceramic. Similarly, barium oxide enriches in the residual glass phase, and an increase in its content also leads to deterioration in the thermal shock resistance and the acid and alkali resistance. Uniquely, elements such as Ca, Mg, and Zn can be dissolved into the β-quartz solid solution during the high-temperature crystallization process, thus increasing the crystallinity; their impact on the expansion coefficient is smaller than that of alkali metal elements like Na and K, and they help maintain relatively excellent acid and alkali resistance (while doping of Ca, Mg, Zn, etc., into the crystal causes slight changes in unit cell parameters, the effect is insignificant). Among these, the β-quartz solid solution formed with Zn has a lower expansion coefficient than the β-quartz solid solution formed with Mg.

Herein, based on that the content of SiO₂ is 69.5 mol%-71.5 mol%, the content of Al₂O₃ is 13 mol%-14.2 mol%, the content of Li₂O is 7.4 mol%-8.8 mol%, the content of P₂O₅ is 0.37 mol%-0.55 mol%, the content of SnO₂ is 0.05 mol%-0.15 mol%, the content of As₂O₃ + Sb₂O₃ + B₂O₃ + F is < 0.1 mol%, 1.65 < (SiO₂ + Al₂O₃) / (100 × P₂O₅) < 2.2, and the ratio of the mass content of the β-spodumene solid solution to the mass content of the high-quartz solid solution is 1.2%-9.3% relative to the total mass of crystals contained in the glass-ceramic, maintaining (CaO + 0.4 × MgO + 1.2 × ZnO) / [0.5 × (BaO + SrO) + 1 × Na₂O + 0.2 × K₂O] no higher than 2.4 is more conducive to improving high-temperature meltability and reducing the difficulty of melting and forming processes of the glass-ceramic. Maintaining (CaO + 0.4 × MgO + 1.2 × ZnO) / [0.5 × (BaO + SrO) + 1 × Na₂O + 0.2 × K₂O] no lower than 1.5 is more conducive to reducing the thermal expansion coefficient of the glass-ceramic, and enhancing the ability to resist sudden thermal changes and the acid and alkali resistance.

In some optional embodiments, 1.6 < (CaO + 0.4 × MgO + 1.2 × ZnO) / [0.5 × (BaO + SrO) + 1 × Na₂O + 0.2 × K₂O] < 2.4. Herein, (CaO + 0.4 × MgO + 1.2 × ZnO) / [0.5 × (BaO + SrO) + 1 × Na₂O + 0.2 × K₂O] is, such as, 1.6, 1.7, 1.8, 1.9, 2, 2.1, 2.2, 2.3 and 2.4.

Further optionally, 2 < CaO + 0.4 × MgO + 1.2 × ZnO) / [0.5 × (BaO + SrO) + 1 × Na₂O + 0.2 × K₂O] < 2.4. It is understandable that, in this solution, it is more conducive to lowering the thermal expansion coefficient of the glass-ceramic, improving the ability to resist sudden thermal changes and the acid and alkali resistance while reducing the melting difficulty of the glass-ceramic.

In some optional embodiments, the chemical composition thereof, on the mole percentage basis, further includes: CaO: 0.05 mol%-0.50 mol%, MgO: 0.90 mol%-1.40 mol%, ZnO: 0.95 mol%-1.45 mol%, SrO + BaO: 0.55 mol%-0.80 mol%, and K₂O + Na₂O: 0.6 mol%-1.0 mol%.

Herein, the content of CaO not exceeding 0.50 mol% is more conducive to preventing unintended crystallization during the calendering forming process.

Herein, the content of MgO not lower than 0.90 mol% is more conducive to enhancing a high-temperature fluxing effect, suppressing crystallization during the forming process, and reducing a heat treatment temperature during a crystallization stage. MgO can be dissolved into high-quartz solid solution or β-spodumene solid solution, thus increasing the crystallinity of the glass-ceramic, but it significantly increases the thermal expansion coefficient. The content of MgO not exceeding 1.4 mol% is more favorable for reducing the thermal expansion coefficient of the glass-ceramic.

Herein, the content of ZnO not lower than 0.95 mol% is more conducive to reducing the viscosity of the glass-ceramic, inhibiting crystallization during the forming process, lowering the melting and crystallization temperatures, and increasing crystallinity. ZnO can be dissolved into high-quartz solid solution or β-spodumene solid solution, enhancing crystallinity but also increasing the thermal expansion coefficient of the glass-ceramic. The content of ZnO not exceeding 1.45 mol% is more favorable for reducing the thermal expansion coefficient of the glass-ceramic.

Herein, oxides such as BaO, Na₂O, and K₂O act as fluxing agents during the high-temperature melting process of the glass-ceramic, thus improving melting quality. However, during the high-temperature crystallization process, these three oxides enrich in the residual glass phase, thus reducing the acid and alkali resistance of the glass-ceramic while increasing the thermal expansion coefficient. The content of SrO + BaO not lower than 0.55 mol% is more conducive to improving the meltability of the high-temperature glass, enhancing a refractive index of the LAS glass-ceramic, and improving visual texture. The content of SrO + BaO not exceeding 0.80 mol% is more favorable for reducing the thermal expansion coefficient of the glass-ceramic, and improving the ability to resist sudden thermal changes and the acid and alkali resistance.

Herein, the content of K₂O + Na₂O not lower than 0.6 mol% is more conducive to reducing the viscosity of the glass-ceramic, lowering the difficulty of high-temperature melting and calendering forming, and reducing the crystallization temperature, thus enhancing manufacturability of the glass-ceramic. The content of K₂O + Na₂O not exceeding 1.0 mol% is more favorable for reducing the thermal expansion coefficient of the glass-ceramic, and improving the ability to resist sudden thermal changes and the acid and alkali resistance. It is understandable that the content of calcium oxide varies significantly between different batches of ore raw materials. When necessary, additional calcium carbonate minerals can be added to maintain compositional stability during production. Sodium oxide and potassium oxide are commonly present in mineral raw materials, but if required, they can also be supplemented via potassium or sodium salts.

In some optional embodiments, the content of CaO is, such as, 0.05 mol%, 0.1 mol%, 0.2 mol%, 0.3 mol%, 0.4 mol% and 0.5 mol%. The content of MgO is, such as, 0.9 mol%, 1 mol%, 1.1 mol%, 1.2 mol%, 1.3 mol% and 1.4 mol%. The content of ZnO is, such as, 0.95 mol%, 1.05 mol%, 1.15 mol%, 1.25 mol%, 1.35 mol% and 1.45 mol%. The content of SrO + BaO is, such as, 0.55 mol%, 0.6 mol%, 0.7 mol% and 0.8 mol%. The content of K₂O + Na₂O is, such as, 0.6 mol%, 0.7 mol%, 0.8 mol%, 0.9 mol% and 1 mol%.

In some optional embodiments, the chemical composition thereof, on the mole percentage basis, further includes: 0.71 < (TiO₂ + ZrO₂) / (R₂O + RO) < 0.89, wherein R₂O represents oxides of monovalent alkali metal elements excluding Li₂O, and RO represents oxides of divalent metal elements, including those from Group IIA and Zn from Group IIB.

Herein, (TiO₂ + ZrO₂) / (R₂O + RO) is, such as, 0.71, 0.72, 0.74, 0.76, 0.78, 0.8, 0.83, 0.86 and 0.89.

It is understandable that the crystalline phase of the glass-ceramic has better acid and alkali corrosion resistance than the glass phase. Increasing the total content of nucleating agents TiO₂ and ZrO₂ is beneficial to promote crystallization. However, excessively high nucleating agent content will lead to a reduction in the content of fluxing agents or glass network formers. The reduction in the fluxing agent content will result in difficult glass melting, increased bubbles, and inhomogeneous melting, thus reducing product quality or significantly raising production costs. The reduction in glass network former content will result in decreased acid and alkali resistance. Excessively low total content of TiO₂ and ZrO₂ will lead to overly high crystallization activation energy of the glass-ceramic, reduced crystallization efficiency, a reduced crystallinity, and further a weakened acid and alkali resistance of the glass-ceramic. Lithium oxide is the main component of the LAS glass-ceramic; R₂O herein does not include lithium oxide and generally refers to sodium oxide and potassium oxide, but can further include cesium oxide and rubidium oxide. RO herein generally refers to calcium oxide, magnesium oxide, zinc oxide, barium oxide, etc., and can further include strontium oxide. By mutually constraining the total amount of nucleating agents and the total amount of fluxing agents, (TiO₂ + ZrO₂) / (R₂O + RO) not lower than 0.71 is more conducive to ensuring that the crystallization temperatures of the high-quartz solid solution and the β-spodumene solid solution are reasonable working temperatures and that the crystallization efficiency is suitable for industrial production, which helps increase crystallinity and enhance the acid and alkali resistance of the glass-ceramic. (TiO₂ + ZrO₂) / (R₂O + RO) not higher than 0.89 is more beneficial for reducing melting difficulty, improving the quality of the glass-ceramic or lowering production costs, and enhancing the acid and alkali resistance of the glass-ceramic.

Optionally, 0.73 < (TiO₂ + ZrO₂) / (R₂O + RO) < 0.87, wherein (TiO₂ + ZrO₂) / (R₂O + RO) is, such as, 0.73, 0.74, 0.76, 0.78, 0.8, 0.83, 0.86, and 0.87.

Further optionally, 0.75 < (TiO₂ + ZrO₂) / (R₂O + RO) < 0.85. It is understandable that in this solution, it is more conducive to improving the crystallization efficiency, increasing the crystallinity, enhancing the acid and alkali resistance of the glass-ceramic, and reducing the melting difficulty, thus improving the quality of the glass-ceramic or lowering production costs.

In some optional embodiments, the chemical composition thereof, on the mole percentage basis, further includes: TiO₂: 2.3 mol%-2.65 mol%, and ZrO₂: 0.65 mol%-0.95 mol%. TiO₂ and ZrO₂ are the most important nucleating agents in the LAS glass-ceramic. Compared with using titanium oxide or zirconium oxide individually, their combined application exhibits a significant synergistic effect, which is more conducive to substantially reducing the crystallization temperature of LAS. The content of TiO₂ not lower than 2.3 mol% and not higher than 2.65 mol% better facilitates synergistic efficiency of the nucleating agents, lowers the crystallization temperature, improves crystallization efficiency, increases crystallinity, and enhances the acid and alkali resistance of the glass-ceramic. The content of ZrO₂ not lower than 0.65 mol% better promotes the synergistic efficiency of the nucleating agents, increases crystallinity, and improves the acid and alkali resistance of the glass-ceramic. The content of ZrO₂ not higher than 0.95 mol% is more beneficial for ensuring devitrification resistance during the high-temperature melting process.

Optionally, the content of TiO is, such as, 2.3 mol%, 2.35 mol%, 2.45 mol%, 2.55 mol%, and 2.65 mol%, and the content of ZrO₂ is, such as, 0.65 mol%, 0.7 mol%, 0.8 mol%, 0.9 mol%, and 0.95 mol%.

In the third aspect, the present invention provides a preparation method of acid and alkali resistant glass-ceramic, including: batching according to components of the glass-ceramic described in the first aspect, performing mixing and melting, followed by forming, and subsequently conducting crystal growth. The glass-ceramic prepared by the preparation method in the present invention exhibits significantly improved acid and alkali resistance, meets usage requirements for kitchen stove surfaces and home appliance panels, and protects appearance of glass-ceramic panels during use.

In the fourth aspect, the present invention provides a kitchen stove or kitchen appliance, including the glass-ceramic described in the first aspect and/or the glass-ceramic prepared by the preparation method described in the second aspect.

The following detailed description of the examples of the present invention is exemplary, only for explaining the present invention, and cannot be understood as limiting the present invention.

### Example 1

Composition of glass-ceramic is listed in Table 1. A preparation method of the glass-ceramic included: batching according to components listed in Table 1, mixing and melting, then calendering, rolling and solidifying to form flat glass, subjecting the rolled and solidified glass to crystal growth, where during a crystal growth process, a temperature was first raised from room temperature to 760 °C and held for 20 min for nucleation, then further raised to 920 °C and held for 40 min for crystallization, whereby the glass-ceramic was obtained.

A crystalline phase of the glass-ceramic of Example 1 was tested. Testing equipment was a Bruker D8 Advance. A testing method and a calculation process were as follows: a measured pattern was compared with PDF standard cards, and after intensity matching of the two, a content ratio was calculated using eva software. A crystalline phase test pattern of the glass-ceramic of Example 1 is shown in FIG. 1. Based on a total mass of crystals contained in the glass-ceramic, a ratio of a mass content of a β-spodumene solid solution to a mass content of a high-quartz solid solution is listed in Table 1. Acid and alkali corrosion resistance tests were performed on the glass-ceramic of Example 1, and test results are listed in Table 1. Test conditions for the acid corrosion resistance test were: a corrosive solution was a 6 mol/L HCl solution, and the corrosion was carried out under a boiling condition for 6 h. Test conditions for the alkali corrosion resistance test were: a corrosive solution was a solution obtained by mixing equal volumes of a 0.5 mol/L Na₂CO₃ solution and a 1 mol/L NaOH solution, and the corrosion was carried out under a boiling condition for 3 h. An acid corrosion resistance test method in the present invention follows GB/T 15728-2021 or *DIN 121166-2001*, while an alkali corrosion resistance test method follows GB/T 6580-2021 or *ISO 695-1991*. A formula for acid-resistance corrosion amount is H = (mass difference / surface area) / 2, meaning that for the acid corrosion resistance test, a half value of corrosion amount of 6 h is taken as the corrosion amount. A formula for alkali-resistance corrosion amount is ρ = mass difference / surface area, meaning that for the alkali corrosion resistance test, a value of the corrosion amount of 3 h is taken as corrosion amount. A linear thermal expansion coefficient of the glass-ceramic of Example 1 was tested at 40 °C-700 °C, and a test result is listed in Table 1.

### Examples 2-17

They were respectively carried out with reference to Example 1, with differences being that the composition of the glass-ceramic and/or the crystallization process parameters were varied as specifically listed in Table 1. Corresponding tests were performed, and test results are listed in Table 1.

### Comparative Examples 1-4

They were respectively carried out with reference to Example 1, with differences being that the composition of the glass-ceramic and/or the crystallization process parameters were varied as specifically listed in Table 2. Corresponding tests were performed, and test results are listed in Table 2.

The linear thermal expansion coefficient test curves at 40 °C-700 °C for the glass-ceramices of Example 1, Example 13, Comparative Example 1, and Comparative Example 2 are shown in FIG. 2.

**Table 1**

| Composition of glass-ceramic / mol% | Example 1 | Example 2 | Example 3 | Example 4 | Example 5 | Example 6 |
|---|---|---|---|---|---|---|
| SiO₂ | 70.95 | 70.96 | 71.02 | 70.97 | 71.00 | 70.60 |
| Al₂O₃ | 13.12 | 13.17 | 13.18 | 13.17 | 13.20 | 13.50 |
| TiO₂ | 2.45 | 2.46 | 2.46 | 2.46 | 2.50 | 2.47 |
| ZrO₂ | 0.77 | 0.77 | 0.77 | 0.77 | 0.80 | 0.77 |
| P₂O₅ | 0.42 | 0.44 | 0.44 | 0.44 | 0.39 | 0.44 |
| CaO | 0.35 | 0.35 | 0.29 | 0.35 | 0.35 | 0.35 |
| MgO | 0.97 | 0.97 | 0.94 | 0.98 | 0.98 | 0.98 |
| ZnO | 1.12 | 1.29 | 1.39 | 1.23 | 1.29 | 1.29 |
| BaO | 0.72 | 0.75 | 0.79 | 0.78 | 0.75 | 0.75 |
| K₂O | 0.07 | 0.10 | 0.07 | 0.10 | 0.10 | 0.10 |
| Na₂O | 0.58 | 0.69 | 0.58 | 0.69 | 0.58 | 0.69 |
| SnO₂ | 0.13 | 0.10 | 0.10 | 0.10 | 0.10 | 0.10 |
| As₂O₃ | 0 | 0 | 0 | 0 | 0 | 0 |
| V₂O₅ | 0.011 | 0.010 | 0.010 | 0.010 | 0.010 | 0.013 |
| Fe₂O₃ | 0.03 | 0.04 | 0.04 | 0.04 | 0.04 | 0.04 |
| Li₂O | 8.3 | 7.89 | 7.90 | 7.89 | 7.89 | 7.89 |
| (SiO₂+Al₂O₃) / (100×P₂O₅) | 2.002 | 1.912 | 1.914 | 1.912 | 2.159 | 1.911 |
| (CaO+0.4*MgO+1.2*ZnO) / (0.5*BaO+Na₂O+0.2*K₂O) | 2.182 | 2.107 | 2.360 | 2.016 | 2.349 | 2.111 |
| (TiO₂+ZrO₂) / (R₂O+RO) | 0.845 | 0.778 | 0.796 | 0.782 | 0.815 | 0.779 |
| Crystallization process | 760 °C 20 min | 760 °C 20 min | 760 °C 20 min | 760 °C 20 min | 760 °C 20 min | 760 °C 20 min |
| | 920 °C 40 min | 910 °C 40 min | 910 °C 40 min | 910 °C 40 min | 920 °C 40 min | 910 °C 40 min |
| β-spodumene solid solution / High-quartz solid solution | 5.82% | 3.82% | 2.88% | 4.89% | 3.67% | 3.86% |
| Acid resistance | 0.61 | 0.70 | 0.56 | 0.83 | 0.59 | 0.79 |
| Alkali resistance | 65 | 73 | 62 | 91 | 63 | 77 |
| Expansion coefficient 40 °C-700 °C | 2.75E-07 | 2.20E-07 | 1.30E-07 | 2.60E-07 | 1.60E-07 | 2.40E-07 |

| Composition of glass-ceramic / mol% | Example 7 | Example 8 | Example 9 | Example 10 | Example 11 | Example 12 |
|---|---|---|---|---|---|---|
| SiO₂ | 70.10 | 70.97 | 69.95 | 70.92 | 70.94 | 70.84 |
| Al₂O₃ | 13.90 | 13.14 | 14.10 | 13.14 | 13.16 | 13.15 |
| TiO₂ | 2.47 | 2.45 | 2.47 | 2.45 | 2.46 | 2.46 |
| ZrO₂ | 0.77 | 0.77 | 0.78 | 0.77 | 0.77 | 0.77 |
| P₂O₅ | 0.44 | 0.45 | 0.46 | 0.50 | 0.44 | 0.44 |
| CaO | 0.35 | 0.35 | 0.35 | 0.35 | 0.35 | 0.35 |
| MgO | 0.98 | 0.97 | 0.98 | 0.97 | 1.14 | 1.36 |
| ZnO | 1.29 | 1.12 | 1.30 | 1.12 | 1.09 | 0.96 |
| BaO | 0.75 | 0.72 | 0.75 | 0.72 | 0.77 | 0.77 |
| K₂O | 0.10 | 0.17 | 0.10 | 0.17 | 0.14 | 0.10 |
| Na₂O | 0.69 | 0.63 | 0.69 | 0.63 | 0.65 | 0.73 |
| SnO₂ | 0.13 | 0.10 | 0.10 | 0.10 | 0.13 | 0.13 |
| As₂O₃ | 0 | 0 | 0 | 0 | 0 | 0 |
| V₂O₅ | 0.010 | 0.011 | 0.010 | 0.011 | 0.010 | 0.010 |
| Fe₂O₃ | 0.04 | 0.03 | 0.04 | 0.03 | 0.04 | 0.04 |
| Li₂O | 7.93 | 8.09 | 7.89 | 8.09 | 7.89 | 7.88 |
| (SiO₂+Al₂O₃) / (100×P₂O₅) | 1.909 | 1.869 | 1.827 | 1.681 | 1.911 | 1.909 |
| (CaO+0.4*MgO+1.2*ZnO) / (0.5*BaO+Na₂O+0.2*K₂O) | 2.111 | 2.033 | 2.122 | 2.033 | 1.989 | 1.803 |
| (TiO₂+ZrO₂) / (R₂O+RO) | 0.779 | 0.813 | 0.779 | 0.813 | 0.780 | 0.756 |
| Crystallization process | 760 °C 20 min | 760 °C 20 min | 760 °C 20 min | 760 °C 20 min | 760 °C 20 min | 760 °C 20 min |
| | 910 °C 40 min | 920 °C 40 min | 910 °C 40 min | 920 °C 40 min | 910 °C 40 min | 910 °C 40 min |
| β-spodumene solid solution / High-quartz solid solution | 3.89% | 6.51% | 4.11% | 6.90% | 5.16% | 5.30% |
| Acid resistance | 0.86 | 0.89 | 0.98 | 1.33 | 0.89 | 1.08 |
| Alkali resistance | 85 | 98 | 103 | 131 | 104 | 129 |
| Expansion coefficient 40 °C-700 °C | 2.50E-07 | 3.30E-07 | 3.10E-07 | 3.60E-07 | 3.00E-07 | 3.60E-07 |

| Composition of glass-ceramic / mol% | Example 13 | Example 14 | Example 15 | Example 16 | Example 17 | |
|---|---|---|---|---|---|---|
| SiO₂ | 70.95 | 70.95 | 70.90 | 70.90 | 70.90 | |
| Al₂O₃ | 13.12 | 13.12 | 13.20 | 13.20 | 13.20 | |
| TiO₂ | 2.45 | 2.45 | 2.38 | 2.54 | 2.38 | |
| ZrO₂ | 0.77 | 0.77 | 0.80 | 0.72 | 0.82 | |
| P₂O₅ | 0.39 | 0.39 | 0.44 | 0.44 | 0.44 | |
| CaO | 0.35 | 0.35 | 0.35 | 0.35 | 0.35 | |
| MgO | 0.97 | 0.97 | 0.98 | 0.97 | 0.98 | |
| ZnO | 1.12 | 1.12 | 1.29 | 1.29 | 1.29 | |
| BaO | 0.72 | 0.72 | 0.75 | 0.75 | 0.75 | |
| K₂O | 0.07 | 0.07 | 0.10 | 0.10 | 0.10 | |
| Na₂O | 0.58 | 0.58 | 0.74 | 0.69 | 0.69 | |
| SnO₂ | 0.13 | 0.13 | 0.10 | 0.09 | 0.13 | |
| As₂O₃ | 0 | 0 | 0 | 0 | 0 | |
| V₂O₅ | 0.011 | 0.011 | 0.010 | 0.010 | 0.010 | |
| Fe₂O₃ | 0.03 | 0.03 | 0.04 | 0.04 | 0.04 | |
| Li₂O | 8.30 | 8.30 | 7.89 | 7.89 | 7.89 | |
| (SiO₂+Al₂O₃) / (100×P₂O₅) | 2.156 | 2.156 | 1.911 | 1.911 | 1.911 | |
| (CaO+0.4*MgO+1.2*ZnO) / (0.5*BaO+Na₂O+0.2*K₂O) | 2.182 | 2.182 | 2.018 | 2.107 | 2.111 | |
| (TiO₂+ZrO₂) / (R₂O+RO) | 0.845 | 0.845 | 0.755 | 0.786 | 0.769 | |
| Crystallization process | 760 °C 20 min | 760 °C 20 min | 760 °C 20 min | 760 °C 20 min | 760 °C 20 min | |
| | 910 °C 30 min | 930 °C 40 min | 910 °C 40 min | 910 °C 40 min | 910 °C 40 min | |
| β-spodumene solid solution / High-quartz solid solution | 1.83% | 8.58% | 2.08% | 2.21% | 2.15% | |
| Acid resistance | 0.79 | 0.55 | 0.91 | 0.82 | 0.85 | |
| Alkali resistance | 136 | 162 | 152 | 138 | 141 | |
| Expansion coefficient 40 °C-700 °C | 1.90E-07 | 3.70E-07 | 4.20E-07 | 3.60E-07 | 3.90E-07 | |

**Table 2**

| Composition of glass-ceramic / mol% | Comparative Example 1 | Comparative Example 2 | Comparative Example 3 | Comparative Example 4 |
|---|---|---|---|---|
| SiO₂ | 70.95 | 70.95 | 70.87 | 70.87 |
| Al₂O₃ | 13.12 | 13.12 | 13.14 | 13.20 |
| TiO₂ | 2.45 | 2.45 | 2.45 | 2.62 |
| ZrO₂ | 0.77 | 0.77 | 0.77 | 0.66 |
| P₂O₅ | 0.39 | 0.39 | 0.55 | 0.44 |
| CaO | 0.35 | 0.35 | 0.35 | 0.35 |
| MgO | 0.97 | 0.97 | 0.97 | 0.97 |
| ZnO | 1.12 | 1.12 | 1.12 | 1.29 |
| BaO | 0.72 | 0.72 | 0.72 | 0.75 |
| K₂O | 0.07 | 0.07 | 0.17 | 0.10 |
| Na₂O | 0.58 | 0.58 | 0.63 | 0.69 |
| SnO₂ | 0.13 | 0.13 | 0.09 | 0.10 |
| As₂O₃ | 0 | 0 | 0 | 0 |
| V₂O₅ | 0.011 | 0.011 | 0.011 | 0.010 |
| Fe₂O₃ | 0.03 | 0.03 | 0.03 | 0.04 |
| Li₂O | 8.30 | 8.30 | 8.09 | 7.89 |
| (SiO₂+Al₂O₃) / (100×P₂O₅) | 2.156 | 2.156 | 1.527 | 1.911 |
| (CaO+0.4*MgO+1.2*ZnO) / (0.5*BaO+Na₂O+0.2*K₂O) | 2.182 | 2.182 | 2.033 | 2.107 |
| (TiO₂+ZrO₂) / (R₂O+RO) | 0.845 | 0.845 | 0.813 | 0.790 |
| Crystallization process | 760 °C 20 min | 760 °C 20 min | 760 °C 20 min | 760 °C 20 min |
| | 910 °C 20 min | 930 °C 45 min | 920 °C 40 min | 910°C 40 min |
| β-spodumene solid solution / High-quartz solid | 0.20% | 9.89% | 7.38% | < 0.1% |
| solution | | | | |
| Acid resistance | 1.15 | 0.52 | 1.95 | 1.59 |
| Alkali resistance | 182 | 190 | 162 | 192 |
| Expansion coefficient 40 °C-700 °C | 2.32E-07 | 5.33E-07 | 4.10E-07 | 5.60E-07 |

Comparing Examples 1-17 with Comparative Examples 1, 2, and 4, and based on the total mass of the crystals contained in the glass-ceramic, the ratio of the mass content of the β-spodumene solid solution to the mass content of the high-quartz solid solution ranging from 1.2% to 9.3% can improve the acid and alkali resistance of the glass-ceramic. Comparing Examples 1-17 with Comparative Example 3, 1.65 < (SiO₂ + Al₂O₃) / (100 × P₂O₅) < 2.2 can improve the acid and alkali resistance of the glass-ceramic.

Comparing Examples 1-10, 1.75 < (SiO₂ + Al₂O₃) / (100 × P₂O₅) < 2.2 is more conducive to improving the acid and alkali resistance of the glass-ceramic, and 1.9 < (SiO₂ + Al₂O₃) / (100 × P₂O₅) < 2.2 is further more conducive to enhancing the acid and alkali resistance of the glass-ceramic. Comparing Examples 1-7 with Examples 11-12, 2 < (CaO + 0.4 × MgO + 1.2 × ZnO) / [0.5 × (BaO + SrO) + 1 × Na₂O + 0.2 × K₂O] < 2.4 is more conducive to reducing the thermal expansion coefficient of the glass-ceramic and improving the ability to resist sudden thermal changes and the acid and alkali resistance. Comparing Examples 1-7 with Examples 13-17, and based on the total mass of the crystals contained in the glass-ceramic, the ratio of the mass content of the β-spodumene solid solution to the mass content of the high-quartz solid solution ranging from 2.5% to 8.2% is more conducive to improving the acid and alkali resistance of the glass-ceramic.

### INDUSTRIAL APPLICABILITY

The acid and alkali resistant glass-ceramic, the preparation method thereof, and the kitchen stove or kitchen appliance are provided in the present invention, with significantly improved acid and alkali resistance, thus overcoming the problem of existing glass-ceramices in terms of limited acid resistance and limited alkali resistance. It enables enhanced high-temperature melting and processing performance, improved acid and alkali corrosion resistance, reduced thermal expansion, and increased ability to resist sudden thermal changes, thereby meeting the usage requirements for kitchen stove surfaces and home appliance panels, and further being capable of protecting the appearance of glass-ceramic panels during application.

## Claims

1. An acid and alkali resistant glass-ceramic, **characterized in that** a chemical composition thereof, on a mole percentage basis, comprises: SiO₂: 69.5 mol%-71.5 mol%, Al₂O₃: 13 mol%-14.2 mol%, Li₂O: 7.4 mol%-8.8 mol%, P₂O₅: 0.37 mol%-0.55 mol%, SnO₂: 0.05 mol%-0.15 mol%, As₂O₃ + Sb₂O₃ + B₂O₃ + F < 0.1 mol%, 1.65 < (SiO₂ + Al₂O₃) / (100 × P₂O₅) < 2.2;
based on a total mass of crystals contained in the glass-ceramic, a ratio of a mass content of a β-spodumene solid solution to a mass content of a high-quartz solid solution is 1.2%-9.3%; and
the glass-ceramic is subjected to an acid corrosion resistance test, showing a corrosion amount of ≤ 15 mg/dm², wherein detection conditions for the acid corrosion resistance test comprise: using a 6 mol/L HCl solution as a corrosive solution, and performing corrosion under a boiling condition for 6 h; the glass-ceramic is subjected to an alkali corrosion resistance test, showing a corrosion amount of ≤ 175 mg/dm², wherein detection conditions for the alkali corrosion resistance test comprise: using a solution as a corrosive solution prepared by mixing equal volumes of a 0.5 mol/L Na₂CO₃ solution and a 1 mol/L NaOH solution, and performing corrosion under a boiling condition for 3 h.

2. The glass-ceramic according to claim 1, **characterized in that** based on the total mass of the crystals contained in the glass-ceramic, the ratio of the mass content of the β-spodumene solid solution to the mass content of the high-quartz solid solution is 2.5%-8.2%.

3. The glass-ceramic according to claim 2, **characterized in that** the ratio of the mass content of the β-spodumene solid solution to the mass content of the high-quartz solid solution is 2.8%-7.4%.

4. The glass-ceramic according to any one of claims 1-3, **characterized by** 1.75 < (SiO₂ + Al₂O₃) / (100 × P₂O₅) < 2.2.

5. The glass-ceramic according to claim 4, **characterized by** 1.9 < (SiO₂ + Al₂O₃) / (100 × P₂O₅) < 2.2.

6. The glass-ceramic according to any one of claims 1-5, **characterized in that** the chemical composition thereof, on the mole percentage basis, further comprises: 1.5 < (CaO + 0.4 × MgO + 1.2 × ZnO) / [0.5 × (BaO + SrO) + 1 × Na₂O + 0.2 × K₂O] < 2.4.

7. The glass-ceramic according to claim 6, **characterized by** 1.6 < (CaO + 0.4 × MgO + 1.2 × ZnO) / [0.5 × (BaO + SrO) + 1 × Na₂O + 0.2 × K₂O] < 2.4.

8. The glass-ceramic according to claim 7, **characterized by** 2 < (CaO + 0.4 × MgO + 1.2 × ZnO) / [0.5 × (BaO + SrO) + 1 × Na₂O + 0.2 × K₂O] < 2.4.

9. The glass-ceramic according to any one of claims 1-8, **characterized in that** the chemical composition thereof, on the mole percentage basis, further comprises: CaO: 0.05 mol%-0.50 mol%, MgO: 0.90 mol%-1.40 mol%, ZnO: 0.95 mol%-1.45 mol%, SrO + BaO: 0.55 mol%-0.80 mol%, and K₂O + Na₂O: 0.6 mol%-1.0 mol%.

10. The glass-ceramic according to any one of claims 1-9, **characterized in that** the chemical composition thereof, on the mole percentage basis, further satisfies: 0.71 < (TiO₂ + ZrO₂) / (R₂O + RO) < 0.89, wherein R₂O represents an oxide of a monovalent alkali metal element excluding Li₂O, and RO represents an oxide of a divalent metal element.

11. The glass-ceramic according to claim 10, **characterized by** 0.73 < (TiO₂ + ZrO₂) / (R₂O + RO) < 0.87.

12. The glass-ceramic according to claim 11, **characterized by** 0.75 < (TiO₂ + ZrO₂) / (R₂O + RO) < 0.85.

13. The glass-ceramic according to any one of claims 1-12, **characterized in that** the chemical composition thereof, on the mole percentage basis, further comprises: TiO₂: 2.3 mol%-2.65 mol%, and ZrO₂: 0.65 mol%-0.95 mol%.

14. A preparation method of an acid and alkali resistant glass-ceramic, **characterized by** comprising: batching according to components of the glass-ceramic according to any one of claims 1-13, performing mixing and melting, followed by forming, and subsequently conducting crystal growth.

15. A kitchen stove or a kitchen appliance, **characterized by** comprising the glass-ceramic according to any one of claims 1-13 and/or the glass-ceramic prepared by the preparation method according to claim 14.
